# EUROPEAN PATENT APPLICATION

(11) **EP 1 967 082 A1**
(43) Date of publication of application: **10.09.2008**
(21) Application number: 07009011.3
(22) Date of filing: 04.05.2007
(51) Int. Cl.: A23L 1/317

(54) **Continuous production of ground meat flow with a specific temperature and/or fat content**

(30) Priority: 23.02.2007 EP 07003802
(71) Applicant: CFS Slagelse A/S, 4200 Slagelse (DK)
(72) Inventor: Jensen, Eyvind, DK-2600 Glostrup (DK)
(74) Representative: Wolff, Felix

(57) **Abstract**

This problem is solved by a process for the continuous production of minced meat, comprising the following steps:
g) combining frozen fat meat and frozen lean meat to achieve a frozen meat mass flow with a specific fat content,
h) grind and/or mix the meat mass flow,
i) provide fresh lean meat,
j) provide fresh fat meat,
k) measure mass flow of frozen meat, add a mass flow of fresh fat meat and/or a mass flow of fresh lean meat to the mass flow of frozen meat to achieve a resulting meat mass flow with a specific temperature and/or a specific fat content.

## Description

The present invention relates to a process for the continuous production of minced meat, comprising the following steps:
a) combining frozen fat meat and frozen lean meat to achieve a frozen meat mass flow with a specific fat content,
b) grind and/or mix the frozen meat mass flow,
c) provide fresh lean meat,
d) provide fresh fat meat,
e) measure mass flow of frozen meat,
f) add a mass flow of fresh fat meat and/or a mass flow of fresh lean meat to the mass flow of frozen meat to achieve a resulting meat mass flow with a specific temperature and/or a specific fat content.

Processes for the production of minced meat are well known from the state of the art. However, these processes are nowadays still batch-processes so that there is a significant variation in the quality of the resulting product.

It was therefore the objective of the present invention to provide an improved process for the production of minced meat.

This problem is solved by a process for the continuous production of minced meat, comprising the following steps:
a) combining frozen fat meat and frozen lean meat to achieve a frozen meat mass flow with a specific fat content,
b) grind and/or mix the frozen meat mass flow,
c) provide fresh lean meat,
d) provide fresh fat meat,
e) measure mass flow of frozen meat,
f) add a mass flow of fresh fat meat and/or a mass flow of fresh lean meat to the mass flow of frozen meat to achieve a resulting meat mass flow with a specific temperature and/or a specific fat content.

These steps need not be consecutively but are preferably carried out simultaneously.

First of all frozen fat meat and lean frozen meat are combined, to achieve a frozen meat mass flow with a fat content within a specific range. Frozen according to the present invention means, that the meat has preferably a temperature of less that -5°C, preferably less than -16°C and even more preferably less or equal -18°C.

Preferably, the frozen fat meat as well as the frozen lean meat has a specific known fat content.

Fat meat according to present invention means that it has a higher fat content than lean meat. Preferably, the fat meat has a fat content > 10 weight-%, preferably ≥ 15 weight-% and more preferably > 25 weight-%. Lean meat preferably has a fat content of ≤ 40 weight-%, preferably ≤ 30 weight-%.

Preferably, both meats are provided in blocks, so that it is easy for the operator to achieve a fat content within a specific range in the resulting frozen meat by just combining a certain number of frozen fat meat-blocks with a certain number of frozen lean meat blocks.

These frozen meat blocks are preferably ground, for example in a grinder. This grinder produced a continuous frozen meat flow, which can however vary. Subsequently, the mass flow and/or the fat content of the combined frozen meat mass flow is determined.

Parallel, fresh lean meat and/or fresh fat meat are provided and preferably ground separately, for example in grinders.

Fresh meat according to the present invention has a temperature of > 0° C.

Finally, the mass flow of the fresh fat meat and/or a mass flow of the fresh lean meat is added to the mass flow of the frozen meat, to achieve a resulting meat mass flow with a specific temperature, degree of ice crystallization and/or a specific fat content.

Accurate temperature and/or crystallisation degree are preferably achieved by continuously monitoring the flow of frozen meat and by continuously adjusting the flow of the other meat streams. More preferably, the temperature of the mixed meat flows is continuously monitored and controlled.

Preferably this specific temperature is -10 to +10°C after the various mass flows have been combined.

Preferably, the mass flow of the fresh lean meat and/or the mass flow of the fresh fat meat are more preferably continuously or semi-continuously determined and controlled to achieve a resulting meat mass flow with a specific temperature. Preferably, the fat content of the fresh lean meat mass flow and/or the fresh fat meat mass flow are also preferably continuously or semi-continuously determined and these results are used to continuously blend a resulting meat mass flow based on the frozen meat mass flow, the fresh lean meat mass flow and the fat meat mass flow with a certain specific fat content. More preferably the fat content is measured inline most preferably in a non-destructive manner.

Preferably, the frozen meat is provided in blocks with a certain weight. This preferred embodiment of the present invention simplifies the production of a frozen meat mass flow with a certain fat content, because the operator only has to combine fat and lean meat blocks in a certain ratio to produce a frozen meat mass flow. The person skilled in the art understands, that the loading can also be made automatically. Also in this case a simple combination of blocks simplifies the process.

Preferably, the fresh lean meat and/or the fresh fat meat are ground at least pre-ground. This preferred embodiment of the present invention facilitates the handling of the meat products and the termination of their average fat content, if needed.

Preferably, the mass flow and/or the fat content of the fresh lean meat and/or the fresh fat meat are determined. The results of determination can be used as an incoming food inspection and can also be used for an automatic ordering system to order the amounts of fresh lean meat and/or fresh fat meat, which has been processed in a certain time period. The information of the fat content is needed to blend the meat flows to achieve a resulting meat flow with a certain fat content.

Preferably, the resulting meat mass flow is mixed after blending and more preferably cooled in case the resulting mean mass flow has not the desired temperature. Preferably, the temperature adjustment takes place during the mixing step.

Preferably, the resulting meat mass flow is ground in an additional grinder.

In an even more preferred embodiment of the present invention the resulting meat mass flow is portioned and formed.

In a preferred embodiment, the frozen meat portion is zero. In order to achieve a desirable resulting temperature of for example - 2 to - 1°C, the meat has to be cooled during or after processing.

Preferably, water is added preferably to achieve a certain fat content.

Preferably, spices or other food ingredients are added.

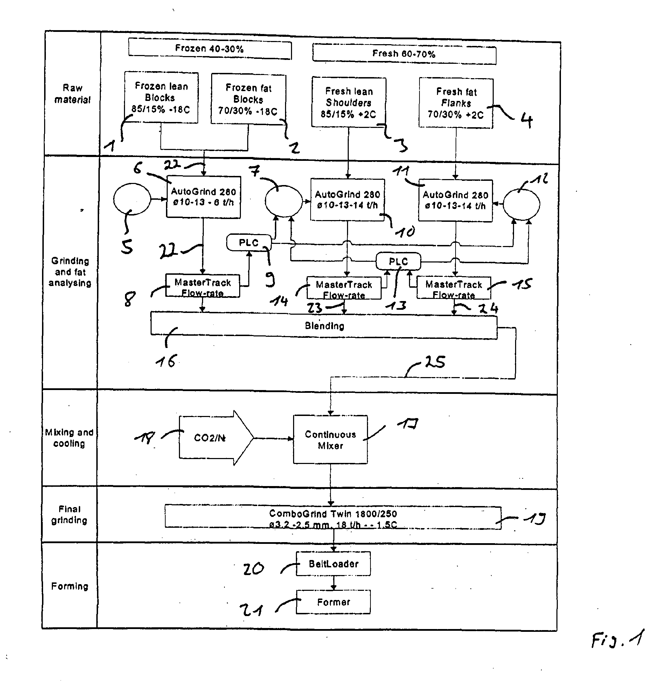

The invention is now explained by means of the only figure 1. However, these explanations are not limiting to the scope of protection of the present invention.

Figure 1 shows one embodiment of the present invention. Frozen lean meat blocks 1, which have a fat content of 15 weight % and a temperature of -18°C are combined with frozen fat blocks which have a fat content of 30% and also a temperature of -18°C in a certain ratio. The combination of the blocks 1 and 2, which each have preferably the same weight is carried out such, that a resulting mass flow 22 of frozen meat with a fat content within a specific range is achieved. If for example a fat content of 22.5 weight % in the frozen mass flow 22 is desirable, the blocks 1 and 2 have to be combined by a ratio 1:1. Subsequently, the frozen blocks 1, 2 are ground in a grinder 6, which is driven by a motor 5. The flow rate of the mass flow 22 is determined by a measurement device 8. In parallel, fresh lean meat 3 with a fat content of 15 % and a temperature of +2°C is ground in a grinder 10. In parallel and separately, fresh fat meat 4 with a fat content of 30 weight % and a temperature of +2°C is ground in a grinder 11. Grinders 10, 11 are driven by motors 7, 12 respectively. After the fresh meats 3, 4 have been ground, their mass flows 23, 24 are measured separately by devices 14, 15 respectively. The grinders 10, 11 can also be equipped with a fat content measurement device for example based on X-ray. The motors 7, 12 which drive the grinders 10, 11 respectively are each controlled by process logic control devices 9, 13, which receive input from the measurement devices 8, 14, 15, in order to generate a meat-blend that has a certain temperature and preferably a certain fat content. The blending is done in a blender 16. The resulting meat mass flow 25, which exits the blender is subsequently continuously mixed and, if needed, cooled for example by the addition of liquid carbon dioxide and/or liquid nitrogen or the like. As a last step, the meat mixture 25 is ground again with a perforated disc, which has holes with a diameter between 1,5 and 8 mm. This meat mixture has now a temperature -10 to +10°C. Subsequently, the minced meat is loaded on a belt, preferably already portioned, and is as a final step formed into a desired form of individual portioned.

The entire process operates continuously. All measurements and control actions are continuous or semi-continuous.

### Examples

### Group 1 - all meat products:

Ground meat portions like Hamburgers comprise mostly beef but other meat-species like pork and poultry as well can be present as well.

There are two main criteria for the mixture; i.e. fat content and forming temperature.

The fat content of meat ranges from 3 weight% (Tatar), 3-6 weight% high quality-, 8-10 weight% medium quality- up to 18-20 weigh% for lower quality ground meats. Hamburgers are normally produced with fat contents in the range of 15-25% (special low fat burgers would often be made based on recipes with other meat additions) The forming temperature is in the range of -2 to -1°C.

The forming temperature is achieved either by using a mix of fresh and frozen meat or by using mainly fresh meat followed by a cooling process.
Approx 50% frozen meat is the upper range and the meat blocks are typically tempered to the range of -15 to -10°C for grinding quality reasons.
This means that the fresh-frozen ratio is anywhere in the range from 0 - 50% frozen.

The desired fat content is obviously achieved by mixing lean and fat raw materials.

### Example:

| | |
|---|---|
| Lean beef, 10% fat | 70.0 % |
| Beef plates, 40% fat | 30.0 % |
| Total, 18-20% fat | 100.0 % |

### Group 2 - "all meat" products spiced:

Very much like group 1 however just with a small amount of spices/onions added for taste reasons.

### Group 3 - high quality extended products:

In some markets are some ground meat portions extended by the addition of water/ice and spices.

Some 10 % water/ice is the upper level in this case where the addition is not supported by other ingredients, which keep the water in the mixture.

### Example:

| | |
|---|---|
| Beef meat, 20% fat | 88.0 % |
| Water/ice | 10.5% |
| Spices/salt | 1.0 % |
| Dried onions | 0.5 % |
| Total, 18-20% fat | 100.0 % |

### Group 4 - medium quality extended products:

This group covers a wide range of recipes where the meat typically is extended by adding texturized/granulated soy protein and water.

### Examples:

| | | | |
|---|---|---|---|
| Beef meat, 20% fat | 76.0 % | 66.0 % | 56.0 % |
| Water/ice | 19.1 % | 25.8 % | 32.5 % |
| Texturized soy protein | 3.0 % | 6.0 % | 9.0 % |
| Spices/salt | 1.4 % | 1.7 % | 2.0 % |
| Dried onions | 0.5 % | 0.5 % | 0.5 % |
| Total | 100.0 % | 100.0 % | 100.0 % |
| Fat content | 16.2% | 14.1 % | 12.0% |

### Group 5 - low quality extended products:

A wide, wide range of recipes where dry ingredients and water are added in order to substitute the meat (and bring the fat level down if that is the goal).

These dry ingredients could be carrageenans, pectin or modified food starches.
Proteins like soy isolate are though the most common ingredients.

### Example:

| | | |
|---|---|---|
| Beef meat, 20% fat | 66.0 % | |
| Beef meat, 10% fat | | 67.3 % |
| Beef meat, 50% fat | | 5.0 % |
| Water/ice | 25.8 % | 6.5 % |
| Texturized soy protein | 4.5 % | |
| Soy protein | 1.5 % | |
| Supro 200G (granulated soybase) | | 20.0 % |
| Soy carbohydrate | | 0.7 % |
| Spices/salt | 1.7 % | 0.5 % |
| Dried onions | 0.5 % | |
| Total | 100.0 % | 100.0 % |
| Fat content | 14.1 % | 10.0 % |

All the above described recipes can be produced with the inventive process.

### List of reference signs:

- 1: frozen lean meat
- 2: frozen fat meat
- 3: fresh lean product
- 4: fresh fat product
- 5: motor
- 6: grinder
- 7: motor
- 8: measurement flow rate
- 9: Process logic control
- 10: Grinder
- 11: Grinder
- 12: Motor
- 13: Process logic control
- 14: Measurement flow rate and/or fat content
- 15: Measurement flow rate and/or fat content
- 16: Blender
- 17: Mixer
- 18: Gas supply
- 19: Grinder
- 20: Beltloader
- 21: Former
- 22: Mass flow frozen meat
- 23: Mass flow fresh lean meat
- 24: Mass flow fresh fat meat
- 25: Resulting meat mass flow

## Claims

1. Process for the continuous production of minced meat, comprising the following steps:
a. combining frozen fat meat (1) and frozen lean meat (2) to achieve a frozen meat mass flow (22) with a specific fat content,
b. grind and/or mix the frozen meat mass flow (22),
c. provide fresh lean meat (3),
d. provide fresh fat meat (4),
e. measure mass flow (22) of frozen meat,
f. add a mass flow (23) of fresh lean meat and/or a mass flow (24) of fresh fat meat to the mass flow (22) of frozen meat to achieve a resulting meat mass flow (25) with a specific temperature and/or a specific fat content.

2. Process according to claim 1, **characterized in, that** the frozen meat (1, 2) is provided in blocks.

3. Process according to one of the preceding claims, **characterized, in that** the fresh lean meat (3) and/or the fresh fat meat (4) are ground.

4. Process according to one of the preceding claims, **characterized in, that** the mass flow and/or the fat content of the fresh lean meat (3) and/or the fresh fat meat (4) are determined.

5. Process according to claim 4, **characterized in, that** the determination of the fat content is used as an incoming food inspection.

6. Process according to one of the preceding claims, **characterized in, that** the resulting meat mass flow (25) is mixed and preferably cooled.

7. Process according to one of the preceding claims, **characterized in, that** the resulting meat mass flow (25) is ground with a grinder (19).

8. Process according to one of the preceding claims, **characterized in, that** the resulting meat mass flow (25) is portioned and/or formed.

9. Process according to one of the preceding claims, **characterized in, that** the frozen meat portion is zero and that the fresh meat is cooled during processing.

10. Process according to one of the preceding claims, **characterized in, that** water is added preferably to achieve a certain fat content.

11. Process according to one of the preceding claims, **characterized in, that** spices or other food ingredients are added.
